Europäisches Patentamt

European Patent Office

Office européen des brevets

(11) Veröffentlichungsnummer: **0 458 014 A2**

# EUROPÄISCHE PATENTANMELDUNG

(21) Anmeldenummer: **91101946.1**

(51) Int. Cl.5: **B23Q 11/00**

(22) Anmeldetag: **12.02.91**

(30) Priorität: **18.04.90 DE 4012314**

(43) Veröffentlichungstag der Anmeldung:
**27.11.91 Patentblatt 91/48**

(84) Benannte Vertragsstaaten:
**CH DE FR GB IT LI SE**

(71) Anmelder: **Burkhardt + Weber GmbH**
**Burkhardt + Weber Strasse 57**
**W-7410 Reutlingen(DE)**

(72) Erfinder: **Balzereit, Hans-Jürgen**
**Grosse Heerstrasse 5/1**
**W-7417 Pfullingen(DE)**

(74) Vertreter: **Patentanwälte Phys. Bartels**
**Dipl.-Ing. Fink Dr.-Ing. Held**
**Lange Strasse 51**
**W-7000 Stuttgart 1(DE)**

(54) **Reinigungsvorrichtung zum Reinigen von Werkzeughaltern.**

(57) 2. Die Erfindung betrifft eine Reinigungsvorrichtung zum Reinigen von Werkzeughaltern 44 mit einem Aufnahmeraum 38 für die Aufnahme des jeweils zu reinigenden Werkzeughalters 44. Die Reinigungsvorrichtung verfügt über Mittel zum Reinigen dieses Werkzeughalters 44 sowie über einen Aufnahmeteil 30 für den Eingriff in eine antreibbare Werkzeugaufnahme 12 einer Bearbeitungsmaschine. Der Aufnahmeraum 38 ist von einem nach mindestens einer Seite hin offenen Grundkörper umgeben und der Aufnahmeteil 30 entspricht der Außenkontur des Werkzeughalters 44.

Fig.1

Die Erfindung betrifft eine Reinigungsvorrichtung zum Reinigen von Werkzeughaltern. Bei der spanabhebenden Bearbeitung von Werkstücken mittels Bearbeitungsmaschinen, wie Werkzeugmaschinen und Bearbeitungszentren, entstehen Schmutzpartikel, bestehend aus Spänen, mikrofeinen Stäuben sowie antrockenbarem Kühlmittel, die sich auf den Werkzeughaltern der für die Bearbeitung einsetzbaren Werkzeuge ablagern und teilweise dort festbakken.

Diese an den Werkzeughaltern befindlichen Schmutzpartikel verunreinigen beim Einwechseln des Werkzeuges auch die Werkzeugaufnahme der Werkzeugmaschine oder des Bearbeitungszentrums und es entsteht zwischen Werkzeugaufnahme und Werkzeughalter ein ungenauer Paßsitz, der zu Positions- und damit zu Bearbeitungsungenauigkeiten führt. Ferner entsteht eine verminderte Reibhaftung zwischen Werkzeughalter und -aufnahme, was eine Art Schlupf entstehen läßt, die den Verschleiß von Halter und Aufnahme begünstigt.

In der Praxis ist man den Verschmutzungen bisher dadurch entgegengetreten, daß man in gewissen zeitlichen Abständen die Werkzeughalter vor ihrem Einsatz von Hand abgebürstet und damit die Verunreinigungen beseitigt hat. Für dieses Abbürsten sind auch in der Anschaffung und im Betrieb teure Handhabungssysteme, die man allgemein auch als Roboter bezeichnet, eingesetzt worden. Beide Verfahren haben sich als unwirtschaftlich erwiesen.

Ferner ist es durch die CH-PS 615 105 und die EP-PS 0 065 293 bekannt, die Werkzeugaufnahme der antreibbaren Arbeitsspindel mittels einer Reinigungsvorrichtung unmittelbar zu reinigen, um die über die Werkzeughalter jeweils in die Werkzeugaufnahme eingebrachten Verschmutzungen von Zeit zu Zeit zu entfernen. Bei den dahingehenden Verfahren und den zugehörigen Vorrichtungen kommt es allerdings nach wie vor zu Verschmutzungen zwischen Halter und Aufnahme, sobald ein verschmutzter Halter in die Aufnahme eingesetzt wird, was zu den eingangs erwähnten Problemen führt.

Durch die DD 241 034 A1 ist eine Reinigungsvorrichtung bekannt, die die Merkmale a) bis c) des Hauptanspruchs aufweist. Bei der dortigen Reinigungsvorrichtung wird der Aufnahmeraum seitlich von zwei Bürsten begrenzt, die die Mittel zum Reinigen des Werkzeughalters darstellen. Diese bekannte Reinigungsvorrichtung ist mit einem Aufnahmeteil in die Werkzeugaufnahme einsetzbar.

Das mittels der Werkzeugaufnahme starr an der Bearbeitungsmaschine gehaltene Bürstenpaar bürstet unter der Vorspannung von Blattfedern den Werkzeughalter ab, sobald dieser mit der Werkzeugwechseleinrichtung der Bearbeitungsmaschine entlang einer Kurvenbahn durch die Reinigungsvorrichtung hindurchbewegt wird. Diese bekannte Reinigungsvorrichtung liefert insbesondere, wenn die Verschmutzungen auf dem Werkzeughalter festgebacken sind, ein schlechtes Reinigungsergebnis.

Durch die DD 86 549 sowie durch den JP-Abstract 1-153248 (A) vom 13.Sept.1989 Vol.13/No.415 sind jeweils Reinigungsvorrichtungen vorbekannt, die die Merkmale a), b) und d) des Hauptanspruchs aufweisen. Hierbei handelt es sich um Zusatzeinrichtungen, die im Bereich der Bearbeitungsmaschine aufgestellt werden und entsprechend Platz an der Maschine beanspruchen, der dann nicht mehr für sonstige unter Umständen notwendige Einrichtungen, wie Meß- und/oder Handhabungssysteme od.dgl., zur Verfügung steht. Ferner benötigen diese Zusatzeinrichtungen für ihren Einsatz eigenständige Ansteuer- und Antriebsmittel, was sie technisch aufwendig macht.

Ausgehend von diesem Stand der Technik liegt der Erfindung die Aufgabe zugrunde, eine Reinigungsvorrichtung zum Reinigen von Werkzeughaltern zu schaffen, mit der sich optimale Reinigungsergebnisse erzielen lassen, mittels der platzverbrauchende, an der Bearbeitungsmaschine anzubringende aufwendige Zusatzeinrichtungen entfallen und die sich wirtschaftlich einsetzen läßt. Diese Aufgabe löst eine Reinigungsvorrichtung mit den Merkmalen a) bis e) des Hauptanspruchs, die auch in dieser Gesamtheit den Schutzumfang bestimmen.

Mit der erfindungsgemäßen Reinigungsvorrichtung ist eine Art Werkzeug gegeben, das sich, wie die übrigen Werkzeuge der Bearbeitungsmaschine, durch die an der Maschine gegebenen Einrichtungen, wie beispielsweise Werkzeugaufnahme, Werkzeugwechsler, Werkzeugmagazin, ohne weiteres handhaben läßt.

Der Werkzeughalter des jeweiligen Werkzeuges läßt sich durch Einführen in die Reinigungsvorrichtung, die in Eingriff mit der Werkzeugaufnahme ist, jederzeit vor seinem Einwechseln in die Werkzeugaufnahme reinigen. Somit sind mit Sicherheit Verschmutzungen zwischen Halter und Aufnahme sowie die damit einhergehenden Probleme vermieden. Platz an der Bearbeitungsmaschine verbrauchende aufwendige Zusatzeinrichtungen oder teure Handhabungssysteme für die Reinigung sowie eine Reinigung von Hand sind nicht mehr notwendig, was den Einsatz der erfindungsgemäßen Reinigungsvorrichtung wirtschaftlich macht. Die Reinigungsvorrichtung ist mittels der Werkzeugaufnahme antreibbar, so daß die Mittel zum Reinigen des Werkzeughalters umfassend auf diesen einwirken können, was zu optimalen Reinigungsergebnissen führt.

Bei einer bevorzugten Ausführungsform der erfindungsgemäßen Reinigungsvorrichtung ist der Grundkörper topfförmig ausgebildet und weist in seiner Mantelfläche mindestens eine den Aufnahmeraum mit der Umgebung verbindende seitliche Ausnehmung mit einer Öffnungsweite auf, die der Außenkontur des aufzunehmenden Werkzeughalters angepaßt ist. Hierdurch läßt sich der Werkzeughalter des Werkzeuges mittels der Werkzeugwechseleinrichtung seitlich durch die Ausnehmung im Grundkörper in den Aufnahmeraum einfahren. Zusätzlicher Verfahrweg wird eingespart, der ansonsten entsteht, wenn man den zu reinigenden Werkzeughalter des Werkzeuges stirnseitig vom Grundkörper aus gesehen in dessen Aufnahmeraum bringt. Dies spielt vor allem dann eine Rolle, wenn eine Werkzeugwechseleinrichtung mit Greifarmen zwar verschwenkbar, aber axial nicht oder im Hinblick auf den Verfahrweg nur begrenzt verfahrbar ist, was häufig bei älteren Bearbeitungsmaschinen der Fall ist.

Bei einer besonders bevorzugten Ausführungsform der erfindungsgemäßen Reinigungsvorrichtung weist diese zwischen ihrem Grundkörper und dem Aufnahmeteil einen Greifteil auf, der für den Angriff einer Werkzeugwechseleinrichtung der Bearbeitungsmaschine vorgesehen ist. Hierdurch läßt sich die Reinigungsvorrichtung mittels der Werkzeugwechseleinrichtung ohne weiteres handhaben. Vorzugsweise ist hierbei der Greifteil der Reinigungsvorrichtung gleich dem Greifteil des jeweiligen Werkzeughalters ausgebildet und weist insbesondere eine umlaufende Ringnut auf. Damit ist eine weitgehende Standardisierung aller zu handhabenden Einzelkomponenten, bestehend aus Reinigungsvorrichtung(en) und Werkzeug(en), erhalten, die auf der DIN 69 871 basieren kann.

Bei einer weiteren bevorzugten Ausführungsform der erfindungsgemäßen Reinigungsvorrichtung ist die Außenkontur des jeweiligen Werkzeughalters und des Aufnahmeteils aus einem konischen oder zylindrischen Schaft gebildet.

Bei einer besonders bevorzugten Ausführungsform der erfindungsgemäßen Reinigungsvorrichtung weisen die Mittel zur Reinigung des Werkzeughalters

- mindestens eine Reinigungsbürste und/oder
- mindestens eine Abstreifereinrichtung und/oder
- mindestens eine Einrichtung zum Aufbringen eines Reinigungsmediums und/oder
- mindestens eine, vorzugsweise mit Druckluft unter hohem Druck arbeitende Blaseinrichtung

auf.

Besonders gute Reinigungsergebnisse lassen sich hierbei erzielen, wenn man über den Umfang des Werkzeughalters gleichmäßig verteilt mehrere der Mittel zur Reinigung gleichzeitig einwirken läßt. So ist es besonders vorteilhaft, Reinigungsbürsten mit Abstreifereinrichtungen zusammenwirken zu lassen und die Einrichtung zum Aufbringen des Reinigungsmediums mit der Blaseinrichtung zu kombinieren.

Bei einer weiteren bevorzugten Ausführungsform der erfindungsgemäßen Reinigungsvorrichtung sind die Mittel zur Reinigung des Werkzeughalters vom Grundkörper aufgenommen,

- die, sofern sie aus der jeweiligen Reinigungsbürste und/oder der jeweiligen Abstreifereinrichtung bestehen, für eine Anlage mit dem Werkzeughalter, zumindest teilweise, in den Aufnahmeraum hineinragen und
- die, sofern es sich um die Einrichtung zum Aufbringen des Reinigungsmediums und/oder die Blaseinrichtung handelt, aus Kanälen gebildet sind, die den Aufnahmeraum mit den das Reinigungsmedium bzw. die Druckluft führenden, innerhalb der Werkzeugaufnahme verlaufenden Leitungen verbinden.

Sofern die jeweilige Reinigungsbürste und/oder die jeweilige Abstreifereinrichtung um einen gewissen Vorstand in den Aufnahmeraum hineinragen, lassen sich diese somit unter einer vorgebbaren Vorspannung an den Werkzeughalter anlegen, was das Reinigungsergebnis verbessert. In der Werkzeugaufnahme verlaufen bei den meisten Werkzeugmaschinen und Bearbeitungszentren ohnehin Leitungen, mit denen die sonst üblichen Werkzeuge für deren Einsatz und Betätigung mit Kühlschmierstoffflüssigkeit bzw. Druckluft - auch unter hohem Druck - versorgt werden. Diese werden bei der erfindungsgemäßen Reinigungsvorrichtung dazu benutzt, das Reinigungsmedium für das Aufbringen auf den Werkzeughalter zuzuführen bzw. die Blaseinrichtung mit entsprechender Druckluft zu versorgen. Das Reinigungsmedium kann aus der Kühlschmierstoffflüssigkeit gebildet sein oder aus einem anderen Fluid, das zum Reinigen geeignet ist und das über die innerhalb der Werkzeugaufnahme verlaufenden Leitungen in den Aufnahmeraum zuführbar ist.

Bei einer anderen besonders bevorzugten Ausführungsform weist die jeweilige Reinigungsbürste über die gesamte Länge des zu reinigenden Werkzeughalters Bürsten auf und/oder sind entlang einer definierbaren Planfläche des Werkzeughalters Mittel zur Reinigung, insbesondere in Form von Bürsten, in Anlage mit dieser Planfläche zu deren Reinigung bringbar.

Bei der zuerst genannten Alternative greifen die Bürsten entlang einer Linie am Umfang des Werkzeughalters an, so daß ein gutes Reinigungsergebnis erzielbar ist. Gemäß der zweiten Alternative läßt sich eine Planfläche des Werkzeuges, die im Sinne der Erfindung ein Teil des Werkzeughalters ist, mit den Mitteln zur Reinigung säubern, wobei diese Planfläche eine geschliffene Anlagefläche sein kann, die in Anlage bringbar ist mit einer stirnseitig an der Werkzeugaufnahme angebrachten Planfläche, die ebenso geschliffen ist. Hierdurch ist eine Zentrierung des Werkzeuges in Bezug auf die Werkzeugaufnahme über diese Planflächen möglich, was eine Rolle spielt, wenn anstelle von den sonst üblichen konischen Schäften zylindrische Verwendung finden sollen. Da es dann für eine genaue Zentrierung entlang den Planflächen auf äußerste Sauberkeit ankommt, die mit der erfindungsgemäßen Reinigungsvorrichtung erst erreichbar ist, ist hier die Möglichkeit eröffnet, in der Praxis ohne Schwierigkeiten derartige zylindrische Werkzeugschäfte einzusetzen.

Bei einer bevorzugten Ausführungsform der erfindungsgemäßen Reinigungsvorrichtung ist die jeweilige Abstreifereinrichtung im wesentlichen leistenförmig ausgebildet und weist für die Anlage mit dem Werkzeughalter eine Abstreiflippe auf. Vorzugsweise ist hierbei die Abstreiflippe mittels Ausgleichsmitteln unter einer vorgebbaren Vorspannung an den Werkzeughalter anpreßber, was das Reinigungsergebnis weiter verbessert.

Im folgenden wird an zwei Ausführungsbeispielen die erfindungsgemäße Reinigungsvorrichtung näher erläutert.

Es zeigen:

Fig. 1    im wesentlichen einen Längsschnitt durch ein erstes Ausführungsbeispiel der Reinigungsvorrichtung entlang der Linie I - I in Fig.2;

Fig. 2    im wesentlichen eine Stirnansicht auf das erste Ausführungsbeispiel der Reinigungsvorrichtung;

Fig. 3    einen Längsschnitt durch ein zweites Ausführungsbeispiel der Reinigungsvorrichtung entlang der Linie II - II in Fig.4;

Fig. 4    im wesentlichen eine Stirnansicht auf das zweite Ausführungsbeispiel der Reinigungsvorrichtung.

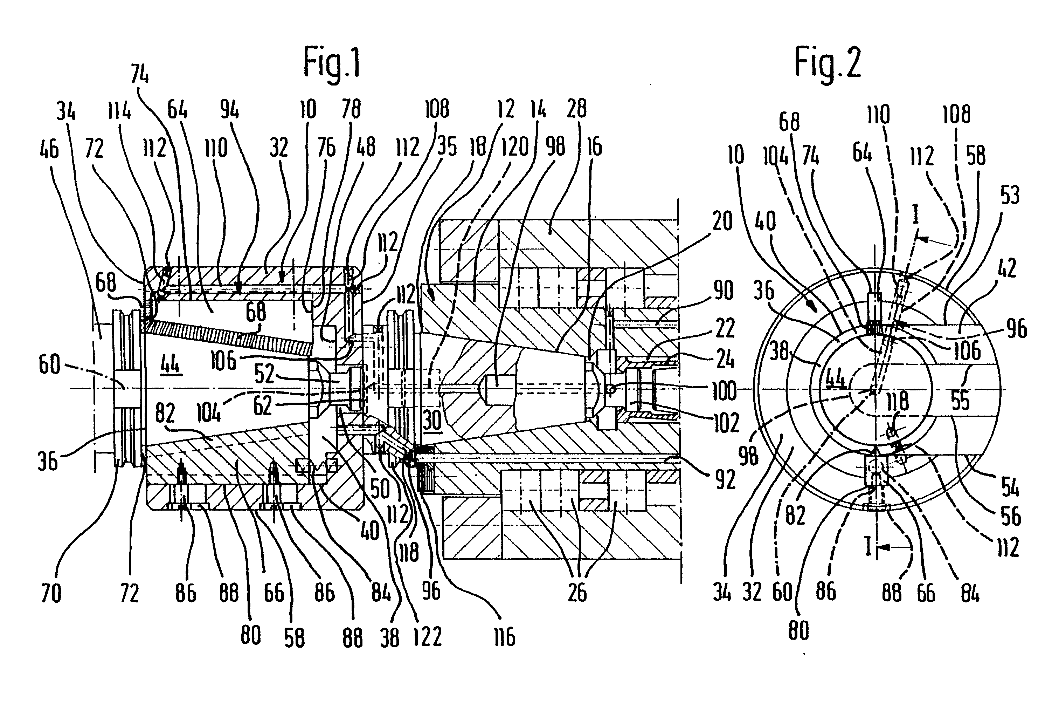

Zunächst wird die Reinigungsvorrichtung an Hand des ersten Ausführungsbeispiels nach den Fig.1 und 2 näher beschrieben. In der Fig.1 ist die Reinigungsvorrichtung als Ganzes mit der Bezugsziffer 10 bezeichnet. In Blickrichtung rechts davon ist in der Fig.1 eine als Ganzes mit 12 bezeichnete Werkzeugaufnahme dargestellt, wie sie üblicherweise bei Werkzeugmaschinen und Bearbeitungszentren Verwendung findet. Die Werkzeugaufnahme 12 ist im wesentlichen rotationssymmetrisch ausgebildet und weist ein zylindrisches Grundteil 14 mit einem hohlen Innenkonus 16 auf, der an seinem größten Innendurchmesser 18 ins Freie tritt. An dem dem Innendurchmesser 18 benachbart gegenüberliegenden Ende des Innenkonusses 16 weist dieser seinen kleinsten Innendurchmesser 20 auf, an den sich ein Innenraum 22 in Längsrichtung anschließt, in dem eine Spannzange 24 längsverfahrbar geführt ist.

Die Werkzeugaufnahme 12 ist Teil einer nicht näher dargestellten Arbeitsspindel, die in üblicher und daher nicht näher beschriebener Weise mittels weiterer Spindeln antreibbar ist.

Die Werkzeugaufnahme 12 ist ferner am Außenumfang ihres zylindrischen Grundteils 14 über Lager 26, die in der Fig.1 nur andeutungsweise wiedergegeben sind, in einer starr ausgebildeten Lagerwand 28 der Werkzeugmaschine bzw. des Bearbeitungszentrums drehbar, aber axial unverschiebbar geführt.

Die mit 10 bezeichnete Reinigungsvorrichtung weist einen Aufnahmeteil in Form eines konisch verlaufenden Werkzeugschaftes 30 auf, dessen Außenkontur dem Innenkonus 16 der Werkzeugaufnahme 12 für einen Eingriff in dieselbe angepaßt ist. An dem dem Werkzeugschaft 30 gegenüberliegenden Ende der Reinigungsvorrichtung 10 weist diese einen zylindrischen Grundkörper 32 auf mit zwei einander gegenüberliegenden planen Stirnflächen 34 und 35, wobei die dem Werkzeugschaft 30 zugekehrte Stirnfläche 35 im wesentlichen geschlossen ist und die ihr gegenüberliegende Stirnfläche 34 eine ins Freie führende, im Querschnitt kreisförmige Öffnung 36 aufweist. Diese Öffnung 36 verbindet einen im vorliegenden Fall im wesentlichen zylindrisch ausgebildeten Aufnahmeraum 38 mit der Umgebung, der zumindest teilweise von einer Innenwand in Form einer Zylindermantelfläche 40 umschlossen ist, die den zylindrischen Grundkörper 32 von innen her begrenzt. In dem hier vorliegenden Ausführungsbeispiel der Erfindung weist der Grundkörper 32 eine seitlich angeordnete Ausnehmung 42 (Fig.2) mit einer Öffnungsweite auf, die größer ist als der größte Durchmesser eines aufzunehmenden Werkzeughalters 44 eines Werkzeuges 46, das in Fig.1 in Blickrichtung gesehen links teilweise dargestellt ist. Die Öffnungsweite der Ausnehmung 42 ist also der Außenkontur des aufzunehmenden Werkzeughalters 44 angepaßt.

Der Boden 48 des Aufnahmeraumes 38 weist eine teilweise kreisrunde Vertiefung 50 auf, in die ein Anzugsbolzen 52 eines Werkzeughalters 44 eingreift, sofern dieser in der Reinigungsvorrichtung 10 aufgenommen bzw. eingesetzt ist. Dieser Anzugsbolzen 52 ist in üblicher und daher nicht näher beschriebener Weise derart ausgebildet, daß er auch von der Spannzange 24 der Werkzeugaufnahme 12 erfaß- und fixierbar ist, so daß der gereinigte Werkzeughalter 44 in Form eines konischen Schaftes in dem Innenkonus 16 der Werkzeugaufnahme 12 zentrierbar ist, also zwischen dem Halter 44 und der Aufnahme 12 ein Paßsitz entsteht, sofern der Halter 44 in die Aufnahme 12 eingreifen würde. Die seitlich im Grundkörper 32 eingeschnittene Ausnehmung 42 weist einander zugewandt jeweils zwei gleiche Paare von Seitenwänden 53,54 bzw. 55,56 auf, von denen das erste Paar 53,54 tangential und diese fortführend sich von der inneren Zylindermantelfläche 40 des Aufnahmeraumes 38 bis zum Erreichen der zylindrischen Außenmantelfläche 58 des Grundkörpers 32 erstreckt. Das zweite Paar an Seitenwänden 55,56 führt die zylindrische Begrenzungswand der Vertiefung 50 im Boden 48 ebenfalls bis zum Erreichen der zylindrischen Außenmantelfläche 58 tangential fort. Alle Seitenwände 53 bis 56 verlaufen parallel zueinander und senkrecht zu der Längs- und Drehachse 60 von Reinigungsvorrichtung 10, Werkzeugaufnahme 12 und Werkzeug 46, sofern diese ineinandergreifen. Die Seitenwände 53,54 und 55,56 sind an ihrem dem Aufnahmeteil in Form des Werkzeugschaftes 30 zugekehrten Ende durch den Boden 48 des Grundkörpers 32 bzw. durch den Abschlußboden 62 der Vertiefung 50, der parallel zum Boden 48 verläuft, begrenzt. Zu ihren anderen, der Stirnfläche 34 benachbarten Enden hin sind die beiden Paare von Seitenwänden 53,54 und 55,56 von dieser Stirnfläche 34 selbst bzw. von dem Boden 48 des Grundkörpers 32 begrenzt. Ausgehend von der Vertiefung 50 im Boden 48 erweitert sich also der Aufnahmeraum 38 in Richtung der Stirnfläche 34 im wesentlichen in zwei Stufen mit zunehmenden Durchmessern.

Als Mittel zur Reinigung des Werkzeughalters 44 ist eine Reinigungsbürste 64 (in Fig.1 oben dargestellt) sowie eine Abstreifereinrichtung 66 (in Fig.1 gesehen unten dargestellt) vorgesehen. Die Reinigungsbürste 64 ist im wesentlichen leistenförmig ausgebildet und hat in Längsrichtung gesehen eine keilartige Grundform. An ihren, dem Werkzeughalter 44 zugekehrten Seiten weist diese einzelne Bürsten 68 auf, die, auch zu Bürstenpaaren zusammengefaßt, eine Reinigungsfunktion übernehmen. Die Bürsten 68 sind derart auf der keilförmigen Leiste der Reinigungsbürste 64 angeordnet, daß ihre freien Enden im wesentlichen senkrecht auf die zu reinigenden Flächen des Werkzeuges 46 auftreffen. Die dem Werkzeughalter 44 zugewandte Seite des Keiles verläuft parallel zu dessen Außenkontur. Das Werkzeug 46 weist zwischen dem konisch verlaufenden Werkzeughalter 44 und dem in der Fig.1 nicht dargestellten Bearbeitungskopf ein Greifteil in Form einer sogenannten Trapezrille 70 mit einer umlaufenden Ringnut auf, die für den Angriff des Greifers einer Werkzeugwechseleinrichtung der üblichen Bauart (nicht dargestellt) vorgesehen ist. Diese Trapezrille 70 hat auf ihrer, dem Werkzeughalter 44 zugekehrten Seite eine Planfläche 72, die von den Bürsten 68 der Reinigungsbürste 64 reinigbar ist, die um einen gewissen Überstand über die ansonsten plane Stirnfläche 34 des Grundkörpers 32 hinausragen. Auch hier treffen die Enden der Bürsten 68 im wesentlichen senkrecht auf die Planfläche 72 auf. Ansonsten ist die leistenförmige Reinigungsbürste 64 mit ihren den Bürsten 68 abgekehrten Seiten im wesentlichen in einer im Querschnitt rechteckförmigen Nut 74 aufgenommen, die sich mit ihrer Längsachse in einem radialen Abstand zur Längs- und Drehachse 60 parallel zu dieser erstreckt und dort mittels einer Schraubverbindung (nicht dargestellt) im Grundkörper 32 festgehalten ist. Zur Abstützung der bei der Reinigung der Planfläche 72 auftretenden axialen Kräfte ist die Reinigungsbürste 64 an ihrem der Planfläche 72 abgekehrten Ende 76 in Anlage mit einer abgestuften Fläche 78 des Grundkörpers 32, die im wesentlichen parallel zum Boden 48 sowie zum Abschlußboden 62 der Vertiefung 50 verläuft.

Ein Reinigen der Planfläche 72, die im Sinne der Erfindung als Teil des Werkzeughalters 44 des Werkzeuges 46 anzusehen ist, ist besonders dann sinnvoll, wenn diese geschliffen ist und später dann im Zuge einer Bearbeitung eines Werkstückes mit einer entsprechend ebenso geschliffenen Planfläche an der Stirnseite der Werkzeugaufnahme in Anlage ist. Eine dahingehende Anlage der beiden Planflächen aneinander erlaubt dann dort eine genaue Zentrierung und Ausrichtung des Werkzeughalters und damit des Werkzeuges in der Werkzeugaufnahme, ohne daß der Werkzeughalter und die Werkzeugaufnahme, wie sonst üblich, konisch ausgebildet sein müßten. Vielmehr ist es dann möglich, eine andere, einfacher und billiger herstellbare Außenkontur von Werkzeughalter und Werkzeugaufnahme zu verwenden, beispielsweise eine zylindrische Form. Da die Planfläche 72 des jeweils einzusetzenden Werkzeuges vor einem entsprechenden Anlegen an die Planfläche der Werkzeugaufnahme mittels der erfindungsgemäßen Reinigungsvorrichtung reinigbar ist, lassen sich dort die Schmutzpartikel entfernen, die einer genauen Zentrierung ansonsten entgegenstehen würden. Wird das Werkzeug 46 allein über einen konischen Werkzeughalter 44 in einer Werkzeugaufnahme zentriert, ist eine Reinigung des Konusses 44 ausreichend und die Planfläche 72 ist nicht notwendigerweise zu reinigen.

In Blickrichtung auf Fig.1 gesehen ist unterhalb der Reinigungsbürste 64 dieser gegenüberliegend die Abstreifereinrichtung 66 angeordnet, die beispielsweise aus gehärtetem Metall bestehen kann. Auch diese ist im wesentlichen leistenförmig ausgebildet und in einer Nut 80 des Grundkörpers 32 aufgenommen, die im Querschnitt im wesentlichen rechteckförmig (Fig.2) ausgebildet ist. Die Abstreifereinrichtung 66 weist an ihrer dem Werkzeughalter 44 zugekehrten Seite eine Abstreiflippe 82 auf, die bei aufgenommenem Werkzeughalter 44 entlang einer Linie auf dessen Umfang in Anlage ist. Diese Anlage geschieht unter einem vorgebbaren Preßdruck, die über eine Druckfeder 84 aufgebracht wird, die zwischen dem Boden 48 und die diesem zugekehrten Seite der Abstreifereinrichtung 66 angeordnet eine in Richtung der Planfläche 72 wirkende Axialkraft auf die Abstreifereinrichtung 66 ausübt, was eine federnde Lagerung dieses Abstreifers ergibt. Die Abstreifereinrichtung 66 ist über zwei Schrauben 86 in ihrer Nut 80 gehalten, die, in entsprechenden Langlöchern 88 des Grundkörpers 32 geführt, eine Längsverschiebbarkeit der Abstreifereinrichtung 66 erlauben. Die Druckfeder 84, die beiden Schrauben 86 sowie die Langlöcher 88 bilden zusammen die Ausgleichsmittel für die Abstreifereinrichtung 66.

Der Einfachheit halber sind in der Fig.1 und in der Fig.2 nur jeweils eine Reinigungsbürste 64 bzw. eine Abstreifereinrichtung 66 dargestellt. Es können aber auch mehrere dieser Mittel zur Reinigung für sich oder miteinander kombiniert entlang des konischen Außenumfanges des Werkzeughalters 44 im Grundkörper 32 angeordnet diesen reinigen. Im übrigen sind die jeweilige Reinigungsbürste 64 und die jeweilige Abstreifereinrichtung 66 im Falle des Verschleißes gegen entsprechend neue Bürsten bzw. Abstreifer austauschbar.

Im zylindrischen Grundteil 14 der Werkzeugaufnahme 12 verlaufen zwei Kanäle 90 und 92, wobei der Kanal 90 Teil der als Ganzes mit 94 bezeichneten Blaseinrichtung und der Kanal 92 Teil der als Ganzes mit 96 bezeichneten Einrichtung zum Aufbringen eines Reinigungsmediums ist. Bei den meisten auf dem Markt befindlichen Werkzeugmaschinen und Bearbeitungszentren sind in den Werkzeugaufnahmen dahingehende Kanäle 90 und 92 vorhanden, um die Werkzeuge für eine Bearbeitung von Werkstücken entsprechend handhaben zu können. Über eine durchgehende Längsbohrung 98 innerhalb des Aufnahmeteiles in Form des Werkzeugschaftes 30 der Reinigungsvorrichtung 10 wird über den Kanal 90 und eine Querbohrung 100 im Anzugsbolzen 102 des Werkzeugschaftes 30 Druckluft über weitere Verbindungskanäle 104,106,108,110 in den Aufnahmeraum 38 zugeführt. Die Verbindungskanäle 104 und 108 sowie der Kanal in Form der Querbohrung 100 verlaufen hierbei im wesentlichen senkrecht und die Verbindungskanäle 106 und 110 sowie die Kanäle 90 und 98 im wesentlichen parallel zur Längs- und Drehachse 60 im Grundkörper 32. Die Verbindungskanäle 104,108 und 110 sind über entsprechende Abschlußstopfen 112 zur Umgebung hin abgedichtet, die nach ihrem Entfernen ein Reinigen der Kanäle der Reinigungsvorrichtung 10 zulassen. An seinem der Stirnfläche 34 zugekehrten Ende weist der Verbindungskanal 110 am dortigen Ende des Grundkörpers 32 einen Querkanal 114 auf, der an seinem einen Ende über einen Abschlußstopfen 112 zur Umgebung hin abgeschlossen ist und mit seinem anderen Ende in den Aufnahmeraum 38 mündet. Dieser Querkanal 114 ist Teil des Verbindungskanals 110 und kann an seinem dem Aufnahmeraum 38 zugewandten Ende eine Querschnittsverengung aufweisen (Fig.1), die zu einer Druckerhöhung in Blasrichtung führt. Der Querkanal 114 ist mit seiner Längsachse im spitzen Winkel zur Längs- und Drehachse 60 derart angeordnet, daß die in den Aufnahmeraum 38 austretende Druckluft im wesentlichen senkrecht auf den Werkzeughalter 44 des Werkzeuges 46 auftrifft. Mit der soeben beschriebenen Blaseinrichtung 94 läßt sich somit - auch unter hohem Druck - Druckluft auf die Umfangsfläche des Werkzeughalters 44 zu deren Trocknung und Reinigung bringen. Bei dem vorliegenden Ausführungsbeispiel spielt dies vor allem eine Rolle, da der Werkzeughalter 44 über die noch zu beschreibende Einrichtung 96 zum Aufbringen eines Reinigungsmediums zumindest teilweise mit diesem Reinigungsmedium "verschmutzt" ist, das über die Blaseinrichtung 94, insbesondere beim Ausführen des Werkzeughalters 44 aus dem Aufnahmeraum 38, wegblasbar und/oder abtrockenbar ist.

Der Kanal 92 der Einrichtung 96 zum Aufbringen eines Reinigungsmediums weist an seinem zur Umgebung hinweisenden Ende eine übliche Dichteinheit 116 auf, so daß nach Aufnahme der Reinigungsvorrichtung 10 in die Werkzeugaufnahme 12 der weiterführende Reinigungskanal 118, der im Grundkörper 32 geführt ist, an seinem der Dichteinheit 116 zugekehrten Ende dichtend mit dem Kanal 92, für ein verlustfreies Führen des Reinigungsmediums in den Aufnahmeraum 38, abschließt. Das andere Ende des Reinigungskanals 118 mündet also an der Stelle des Bodens 48 in diesen Aufnahmeraum 38 und auch hier kann über einen Abschlußstopfen 112 die Möglichkeit gegeben sein, den Reinigungskanal 118 von außen her sauber zu halten. Die soeben beschriebene Einrichtung 96 zum Aufbringen eines Reinigungsmediums erlaubt die Zufuhr von Reinigungsmedium in den Aufnahmeraum 38 und spült die auf dem Werkzeughalter 44 sitzenden Schmutzpartikel ebenso weg, wie die bereits abgebürsteten und abgestreiften, im Aufnahmeraum 38 befindlichen Schmutzpartikel. Alle diese Schmutzpartikel verlassen mit dem Reinigungsmedium die Reinigungsvorrichtung 10 über deren Öffnung 36. Das angesprochene Reinigungsmedium kann aus Kühlschmierstoffflüssigkeit der üblichen Art bestehen, die ohnehin bei den meisten Werkzeugmaschinen in der Werkzeugaufnahme zur Verfügung steht. Es kann aber auch aus einem anderen Medium, beispielsweise Fluid oder Paste bestehen, das über den Kanal 92 in den Aufnahmeraum 38 einspeisbar ist.

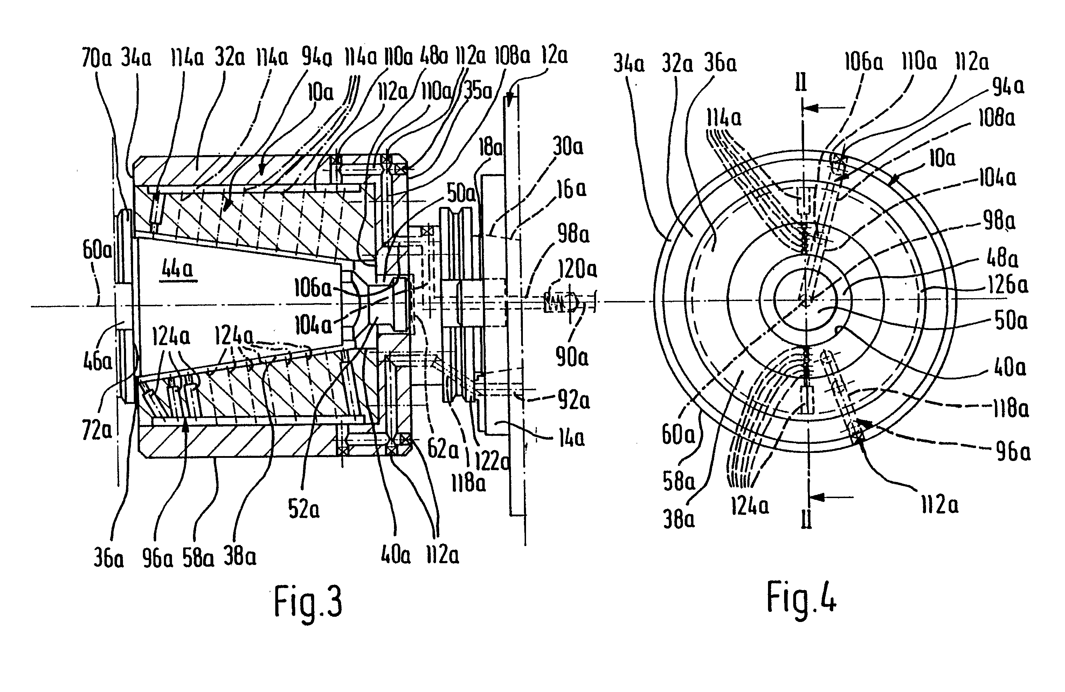

Um zu verhindern, daß bei einem Nichteinsatz der Blaseinrichtung 94 Reinigungsmedium in den Druckluft zuführenden Kanal 90 strömt, kann ein Rückschlagventil 120 der üblichen Art zwischen den Verbindungskanälen 104,106,108,110 und dem Kanal 90 zwischen Grundkörper 32 und Werkzeugschaft 30 vorgesehen sein, das sich durch die Kraft einer Feder in Richtung des Kanals 90, wenn dieser drucklos ist, in seiner Schließstellung befindet. Eine prinzipielle Darstellung dieses Rückschlagventils ist in Fig.3 für das zweite Ausführungsbeispiel der Reinigungsvorrichtung angegeben.

Bei dem in den Fig.1 und 2 beschriebenen ersten Ausführungsbeispiel der Reinigungsvorrichtung sind sowohl eine Reinigungsbürste 64 als auch eine Abstreifereinrichtung 66 gezeigt.

Es ist auch möglich, die Reinigungsvorrichtung nur mit Reinigungsbürsten oder nur mit Abstreifereinrichtungen zu versehen. So könnte beispielsweise anstelle der Reinigungsbürste 64 oder der Abstreifereinrichtung 66 (Fig.1) eine Abstreifereinrichtung 66 bzw. eine Reinigungsbürste 64 im Grundkörper 32 eingesetzt sein.

Zwischen dem Grundkörper 32 und dem Werkzeugschaft 30 ist mit einem vorgebbaren axialen Abstand zur hinteren Stirnfläche 35 eine Trapezrille 122 vorgesehen, die als Normteil der Trapezrille 70 des Werkzeuges 46 entspricht und ebenfalls eine umlaufende Ringnut aufweist. Mittels dieser Trapezrille 122 läßt sich die Reinigungsvorrichtung 10, ebenso wie ein Werkzeug 46, mittels einem Greifer der Werkzeugwechseleinrichtung (nicht dargestellt) handhaben, insbesondere axial in die Werkzeugaufnahme 12 ein- bzw. ausführen.

Im folgenden wird nun anhand der beschriebenen Reinigungsvorrichtung 10 das Verfahren zum Reinigen von Werkzeughaltern näher erläutert. Hierbei wird davon ausgegangen, daß für das Durchführen des Verfahrens eine Werkzeugmaschine oder ein Bearbeitungszentrum zur Verfügung steht, die bzw. das die üblichen Baukomponenten aufweist, wie beispielsweise eine Werkzeugwechseleinrichtung und ein Werkzeugmagazin sowie eine numerische Steuerung, mit der das Verfahren automatisierbar ist.

Zu Beginn des Verfahrens soll kein Teil in der Werkzeugaufnahme 12, insbesondere in deren Innenkonus 16, aufgenommen sein. Die Programm-Steuerung veranlaßt nun, daß die Werkzeugwechseleinrichtung mit zwei Greifarmen aus einem Ablageplatz des Werkzeugmagazins (nicht dargestellt) die Reinigungsvorrichtung 10 vergleichbar einem Werkzeug entnimmt und in den Innenkonus 16 der Werkzeugaufnahme 12 deren konischen Werkzeugschaft 30 einführt.

Hierbei greift einer der Greifer (nicht dargestellt) der Werkzeugwechseleinrichtung die Reinigungsvorrichtung 10 an ihrer normierten Trapezrille 122 und hält diese dort fest. In dieser festgehaltenen Stellung ist die Längs- und Drehachse der Reinigungsvorrichtung parallel zur Längs- und Drehachse 60 der Werkzeugaufnahme 12 ausgerichtet. Der Greifer führt nun eine axiale Verfahrbewegung aus, die parallel zur Längs- und Drehachse 60 verläuft und bei der die Reinigungsvorrichtung 10 aus ihrem hierfür vorgesehenen Ablageplatz des Werkzeugmagazins für einen Reinigungsvorgang entnommen wird. Die Steuerung stoppt die axiale Verfahrbewegung des Greifers der Werkzeugwechseleinrichtung (nicht dargestellt) sobald gewährleistet ist, daß das der Werkzeugaufnahme 12 zugekehrte Ende des Anzugsbolzens 102 der Reinigungsvorrichtung 10 einen ausreichenden axialen Abstand von dieser aufweist.

Diese axiale Verfahrbewegung der Werkzeugwechseleinrichtung erfolgt also in Fig.1 gesehen nach links. Anschließend gibt die Steuerung den Befehl, die Werkzeugwechseleinrichtung um eine Schwenkachse zu verschwenken, die, parallel zur Längs- und Drehachse 60 verläuft. Dieses Verschwenken geschieht so lange, bis der Greifer der Werkzeugwechseleinrichtung mittels der Trapezrille 122 den Werkzeugschaft 30 der Reinigungsvorrichtung 10 vor die Öffnung 18 des Innenkonusses 16 der Werkzeugaufnahme 12 verfahren hat, so daß die Längs- und Drehachse 60 der Werkzeugaufnahme 12 mit der entsprechenden Längs- und Drehachse der Reinigungsvorrichtung 10 fluchtet.

Nach Erhalt dieser Position gibt die Steuerung an die Werkzeugwechseleinrichtung den Befehl, die Reinigungsvorrichtung 10 in Fig.1 gesehen nach rechts so lange in die Werkzeugaufnahme 12 einzufahren, bis die Spannzange 24 den Anzugsbolzen 102 erfaßt hat und der Werkzeugschaft 30 vollends in eine mittenzentrierte Anlage mit dem Innenkonus 16 der Werkzeugaufnahme 12 kommt. Über die Spannzange 24 ist mithin die Reinigungsvorrichtung 10 mit der Werkzeugaufnahme 12 verbunden und läßt sich mittels dieser für eine Drehbewegung um die Längs- und Drehachse 60 antreiben.

Die Drehzahl, mit der diese Drehung erfolgt, ist mittels der numerischen Steuerung vorgebbar. Der Greifer der Werkzeugwechseleinrichtung wird nun außer Eingriff mit der Trapezrille 122 der Reinigungsvorrichtung 10 gebracht und beispielsweise in eine Grundstellung verschwenkt, in der der Reinigungsvorgang auf keinen Fall behindert wird.

Sollte die Werkzeugwechseleinrichtung nur über eine beschränkte axiale Verfahrmöglichkeit in Richtung der Längs- und Drehachse 60 verfügen oder in diese Richtung gar nicht verfahrbar sein, so kann der dahingehende Verfahrweg auch durch die Werkzeugaufnahme 12 selbst geleistet werden, sofern diese beispielsweise über eine Schlittenanordnung axial verfahrbar ist. In diesem Fall braucht die Werkzeugwechseleinrichtung mit dem oder den Greifern nur entsprechend verschwenkbar zu sein.

Nachdem nun die Reinigungsvorrichtung 10 von der Werkzeugaufnahme 12 aufgenommen ist, stellt die numerische Steuerung fest, welcher Werkzeughalter 44 in Form eines Schaftes für eine Reinigung ansteht. Entsprechend entnimmt die Werkzeugwechseleinrichtung das jeweilige Werkzeug 46 über dessen Trapezrille 70 aus dem Ablageplatz des Werkzeugmagazins durch axiales Verfahren parallel zur Längs- und Drehachse 60, wobei diese wiederum beim Entnahmevorgang parallel zur Längs- und Drehachse des Werkzeuges 46 verläuft.

Um axialen Verfahrweg für die Wechseleinrichtung (nicht dargestellt) einzusparen, weist die Reinigungsvorrichtung 10 gemäß dem ersten Ausführungsbeispiel seitlich die bereits beschriebene Ausnehmung 42 auf, über die der zu reinigende Werkzeughalter 44 des Werkzeuges 46 seitlich in den Aufnahmeraum 38 der Reinigungsvorrichtung 10 einschwenkbar ist. Hierzu steuert die numerische Steuerung die Werkzeugaufnahme 12 an und versetzt diese so lange in eine Drehbewegung, bis die hierbei mitverschwenkte Ausnehmung 42 derart in der kreisförmigen Bewegungsbahn des Greifers mit dem Werkzeug 46 liegt, daß dessen zu reinigender Halter 44 ohne Kollision mit der Reinigungsvorrichtung 10 in deren Aufnahmeraum 38 eingeschwenkt werden kann. Durch entsprechendes Ablegen der Reinigungsvorrichtung 10 im Magazin ist stets gewährleistet, daß die numerische Steuerung immer dieselben Anfangsbedingungen vorfindet und demgemäß der Schwenkwinkel um die Längs- und Drehachse 60 für die Ausnehmung 42 immer derselbe ist. Das Einschwenken des Werkzeughalters 44 in den Aufnahmeraum 38 über den Greifer der Werkzeugwechseleinrichtung (nicht dargestellt) wird durch die numerische Steuerung beendet, sobald die Längs- und Drehachse des Werkzeughalters 44 mit den Längs- und Drehachsen 60 von Werkzeugaufnahme 12 und Reinigungsvorrichtung 10 fluchtet. Während des Reinigungsvorganges hält der Greifer der Werkzeugwechseleinrichtung das Werkzeug 46 an seiner Trapezrille 70 und damit den Werkzeughalter 44 in seiner Lage im Aufnahmeraum 38 fest.

Über die Spindeln der Werkzeugmaschine bzw. des Bearbeitungszentrums wird die Werkzeugaufnahme 12 angetrieben und für die Reinigung des Halters 44 auf eine Drehzahl von ca. 300 bis 400 Umdrehungen in der Minute gebracht. Mit dieser Drehzahl umfahren nun auch die Mittel zur Reinigung in Form der Reinigungsbürste 64 und der Abstreifereinrichtung 66 unter Anlage den konischen Werkzeughalter 44. Während des Reinigungsvorganges wird, wie bereits beschrieben, Reinigungsmedium, insbesondere in Form von Kühlschmierstoffflüssigkeit, über entsprechende Kanäle 92,118 in den Aufnahmeraum 38 der Reinigungsvorrichtung 10 geleitet.

Sobald die Reinigung beendet ist, trägt die numerische Steuerung wiederum Sorge dafür, daß die Ausnehmung 42 derart in eine Richtung gedreht wird, daß der Greifer den Werkzeughalter 44 ungehindert aus dem Aufnahmeraum 38 in Richtung auf den freien Ablageplatz des Werkzeugmagazins zu herausschwenken kann.

Kurz vor dem Herausschwenken kann die Blaseinrichtung 94 betätigt werden und die über den Querkanal 114 in den Aufnahmeraum 38 hineinströmende Druckluft bläst das noch am Werkzeughalter 44 befindliche Reinigungsmedium, um dessen Anhaften und Antrocknen zu verhindern, weg. Um das Werkzeug 46 mit seinem gereinigten Halter 44 und die Reinigungsvorrichtung 10 auf ihre Ablageplätze im Bereich des Werkzeugmagazins zurückzuführen, finden die hierfür notwendigen Verfahrbewegungen in umgekehrter Reihenfolge, wie oben angegeben, statt, die durch die numerische Steuerung überwacht werden.

Die Reinigungsvorrichtung kann auch über mehrere Ausnehmungen (nicht dargestellt) in ihrem Grundkörper 32 verfügen, so daß beispielsweise eine Ausnehmung 42 dem Einfahren des Werkzeughalters 44 in den Aufnahmeraum 38 dient, wohingegen die andere Ausnehmung dem Ausfahren vorbehalten ist. Diese seitlichen Ausnehmungen im Grundkörper 32 der Reinigungsvorrichtung 10 sind insbesondere dann vorteilhaft, wenn die Reinigungsvorrichtung 10 bei Werkzeugmaschinen und Bearbeitungszentren älterer Bauart eingesetzt werden soll, deren Komponenten meist nur über beschränkte axiale Verfahrwege verfügen, beispielsweise weil die Werkzeugwechseleinrichtung nur verschwenkbar, nicht aber axial verfahrbar ist.

Es kann aber auch auf eine Ausnehmung 42 im Grundkörper 32 der Reinigungsvorrichtung 10 vollständig verzichtet werden und statt dessen ein Einführen des Werkzeughalters 44 über die Öffnung 36 in den Aufnahmeraum 38 unmittelbar vorgesehen sein. Hierfür ist ein langer axialer Verfahrweg der Werkzeugwechseleinrichtung notwendig, der allerdings durch eine entsprechende Rückfahrbewegung der Werkzeugaufnahme 12 mittels eines verfahrbaren Schlittens (nicht dargestellt), sofern diese vorgesehen ist, wiederum verkürzbar wäre.

Bei manchen Werkzeugmaschinen und Bearbeitungszentren ist es auch vorgesehen, daß die Werkzeugaufnahme 12 unmittelbar aus einem Werkzeugmagazin (nicht dargestellt) die Werkzeuge 46 entnimmt und nach dem Bearbeiten dort auch wieder an hierfür vorgesehenen Ablageplätzen ablegt. In diesem Fall entnimmt die Werkzeugaufnahme 12 dann auch die Reinigungsvorrichtung 10 unmittelbar aus einem Ablagaplatz das Werkzeugmagazins, das aus einem Trommelmagazin gebildet sein kann, dar vor die Werkzeugaufnahme 12 verschwenkt wird. Danach wird der Ablageplatz mit dem zu reinigenden Werkzeughalter 44 vor den Aufnahmeraum 38 mittels dem Werkzeugmagazin verschwenkt und die Reinigungsvorrichtung 10 nimmt unmittelbar den Werkzeughalter 44 des auf diesem Ablageplatz befindlichen Werkzeuges 44 in ihrem Aufnahmeraum 38 auf. Die hierfür notwendigen axialen Verfahrbewegungen führt das Trommelmagazin und/oder die Werkzeugaufnahme 12 aus. Hierbei hält das Werkzeugmagazin mittels des jeweiligen Ablageplatzes das Werkzeug 46 an seiner Trapezrille 70 während des Reinigungsvorganges in seiner Lage fest. Das Ablegen von Werkzeug 46 und Reinigungsvorrichtung 10 auf den entsprechenden Ablageplätzen geschieht in umgekehrter Reihenfolge, wie oben angegeben.

Im folgenden wird ein zweites Ausführungsbeispiel der Reinigungsvorrichtung anhand dar Fig.3 und 4 insoweit erläutert, als es sich von der Reinigungsvorrichtung gemäß dem ersten Ausführungsbeispiel wesentlich unterscheidet. Diejenigen Teile, die den Teilen gemäß dem ersten Ausführungsbeispiel entsprechen, sind mit den gleichen Bezugszeichen bezeichnet, die um den Buchstaben a ergänzt sind.

Der Aufnahmeraum 38a der Reinigungsvorrichtung 10a ist von einer Innenwand 40a umgrenzt, die im wesentlichen entlang der konischen Außenkontur des jeweils aufzunehmenden Werkzeughalters 44a verläuft.

Die Blaseinrichtung 94a bei dem zweiten Ausführungsbeispiel ist als Hochdruckeinrichtung ausgebildet und erlaubt ein Einbringen der Druckluft in den Aufnahmeraum 38a unter einem Druck von ca. 80 Bar, wohingegen bei dem ersten Ausführungsbeispiel ein Druck von 40 bis 60 Bar für den dort vorgesehenen Einsatz ausreichend ist.

Während im ersten Ausführungsbeispiel nur ein Querkanal 114a am Ende des Verbindungskanals 110a vorgesehen ist, sind im zweiten Ausführungsbeispiel in vorgebbaren Abständen voneinander, in Linie hintereinander angeordnet, mehrere derartige Kanäle 114a vorgesehen, die mit ihrem einen Ende in den Verbindungskanal 110a münden und an ihrem anderen Ende, der in den Aufnahmeraum 38a mündet, jeweils eine Querschnittsverengung zur Druckerhöhung aufweisen.

Dieser Hochdruckeinrichtung gegenüberliegend ist die Einrichtung 96a zum Aufbringen eines Reinigungsmediums im Grundkörper 32a angeordnet. Im Gegensatz zum ersten Ausführungsbeispiel, wo der Reinigungskanal 118 unmittelbar in den Aufnahmeraum 38 geführt hat, ist beim zweiten Ausführungsbeispiel die Einrichtung 96a in ihrer Kanalführung im Grundkörper 32a wie die Blaseinrichtung 94 ausgebildet, d.h. über einen parallel zur Längs- und Drehachse 60a im Grundkörper 32a verlaufenden Kanal sind mehrere, schräg verlaufende Querkanäle 124 angeschlossen, die über eine Querschnittsverengung mit ihren einen Enden ebenfalls im Aufnahmeraum 38a münden. In der Fig.3 sind nicht alle Querkanäle 114,124 dargestellt, sondern der Einfachheit halber teilweise strichliniert nur angedeutet.

Die parallel zur Längs- und Drehachse 60a verlaufenden Kanäle der Blaseinrichtung 94a und der Einrichtung 96a, in die die jeweiligen Querkanäle 114a bzw. 124a mit ihren anderen Enden münden, können voneinander getrennt sein oder, wie dies in der Fig.4 dargestellt ist, derart eine radiale Verbindung aufweisen, daß parallel zur zylindrischen Außenmantelfläche 58a des Grundkörpers 32 ein zylinderartiger Hohlraum 126a im Grundkörper 32a gebildet ist. Dies führt dann zu einer Mischung von auf den Werkzeughalter 44a aufzubringender Druckluft mit dem Reinigungsmedium, das hierdurch mit einem vorgebbaren Druck auf die Oberfläche des Werkzeughalters 44a auftrifft. Die vom Werkzeughalter 44a mittels dem Reinigungsmedium nun unter dem Druck der Blaseinrichtung 94a weggespülten Schmutzpartikel verlassen bei dem zweiten Ausführungsbeispiel den Aufnahmeraum 38a ebenfalls über die Öffnung 36a.

Das Ein- und Ausführen des Werkzeuges 46a mit dem Werkzeughalter 44a geschieht im vorliegenden Fall allein über die Öffnung 36a durch axiales Verfahren entlang der Längs- und Drehachse 60a.

Als weiteres Mittel zur Reinigung könnte bei dem zweiten Ausführungsbeispiel ebenfalls eine Reinigungsbürste und/oder eine Abstreifereinrichtung, wie sie für das erste Ausführungsbeispiel näher erläutert wurden, verwendet werden. Soll die Reinigungsvorrichtung 10 bzw. 10a im Hinblick auf ihren Aufnahmeteil in Form eines Werkzeugschaftes 30 bzw. 30a ebenfalls gereinigt werden, kann eine zweite Reinigungsvorrichtung zum Einsatz kommen, die dann die jeweils andere in Gebrauch befindliche Reinigungsvorrichtung bei Bedarf reinigt, indem sie deren Schaft 30 bzw. 30a von Schmutzpartikeln befreit.

Statt die Druckluft unter hohem Druck in den Aufnahmeraum der Reinigungsvorrichtung zu führen, kann auch das Reinigungsmedium unter hohem Druck dort eingebracht werden. Ferner kann es vorgesehen sein, die über die Blaseinrichtung zugeführte Druckluft mit einem Druck zu versehen, der zu Reinigungszwecken zwar nicht mehr ausreicht, wohl aber eine Trocknung von Reinigungsmedium am Werkzeughalter 44, 44a bewirkt. Bei der bisherigen Beschreibung der Erfindung wurde davon ausgegangen, daß die Werkzeugaufnahme als Teil der Arbeitsspindel einer Werkzeugmaschine oder eines Bearbeitungszentrums über einen Spindelantrieb antreibbar ist und üblicherweise der Aufnahme von Werkzeugschäften von Werkzeugen dient, mit denen Werkstücke spanend bearbeitbar sind. Anstelle dahingehender Werkzeugaufnahmen können hier auch Werkzeugaufnahmen Verwendung finden, die außerhalb des eigentlichen Bearbeitungsbereiches an oder in der Umgebung der Werkzeugmaschine angeordnet sind und die auch über einen anderen Antrieb, beispielsweise in Form eines eigenständigen Elektromotors, der die Werkzeugaufnahme unmittelbar antreibt, verfügen können. Bei einer dahingehenden Ausbildung kann die Werkzeugaufnahme auch derart ausgebildet sein, daß sie nur noch der Aufnahme der Reinigungsvorrichtung dient. Dies hat den Vorteil, daß parallel zu einem Bearbeitungsvorgang mit der Werkzeugaufnahme, die Teil der Arbeitsspindel der Maschine ist, über eine von dieser separaten, insbesondere getrennt antreibbaren Werkzeugaufnahme sich eine Reinigung der Werkzeughalter vornehmen läßt.

Bei der bisherigen Betrachtung wurde davon ausgegangen, daß, bis auf die Ausnehmungen, der Aufnahmeraum der Reinigungsvorrichtung im wesentlichen geschlossen ist. Der Aufnahmeraum kann aber auch durch die Umgebung gebildet sein, so daß die Mittel zur Reinigung, beispielsweise in Form der Reinigungsbürsten, den zu reinigenden Werkzeughalter krallenartig umfassen.

Im Gegensatz zum zweiten Ausführungsbeispiel zeigt das erste Ausführungsbeispiel, daß die Innenwand des Grundkörpers der Reinigungsvorrichtung nicht unbedingt parallel zu der Außenkontur des aufzunehmenden Werkzeughalters verlaufen muß. Die Innenwand des Grundkörpers verläuft aber dennoch auch hier im wesentlichen entlang der Außenkontur des aufzunehmenden Werkzeughalters.

Die vorstehende Beschreibung und die Zeichnung beschränken sich nur auf die Angabe von Merkmalen, die für die beispielsweise Verkörperung der Erfindung wesentlich sind. Soweit daher Merkmale in der Beschreibung und in der Zeichnung offenbart und in den Ansprüchen nicht genannt sind, dienen sie erforderlichenfalls auch zur Bestimmung des Gegenstandes der Erfindung.

## Patentansprüche

1. Reinigungsvorrichtung zum Reinigen von Werkzeughaltern (44,44a)
    a) mit einem Aufnahmeraum (38,38a) für die Aufnahme des jeweils zu reinigenden Werkzeughalters (44,44a),
    b) mit Mitteln zum Reinigen dieses Werkzeughalters (44,44a) und
    c) mit einem Aufnahmeteil (30,30a) für den Eingriff in eine antreibbare Werkzeugaufnahme (12,12a) einer Bearbeitungsmaschine,
    d) wobei der Aufnahmeraum (38,38a) von einem nach mindestens einer Seite hin offenen Grundkörper (32,32a) umgeben ist, und
    e) wobei der Aufnahmeteil (30,30a) der Außenkontur des Werkzeughalters (44,44a) entspricht.

2. Reinigungsvorrichtung nach Anspruch 1, dadurch gekennzeichnet, daß der Grundkörper (32) topfförmig ausgebildet ist und in seiner Mantelfläche (58) mindestens eine den Aufnahmeraum (38) mit der Umgebung verbindende seitliche Ausnehmung (42) mit einer Öffnungsweite aufweist, die der Außenkontur des aufzunehmenden Werkzeughalters (44) angepaßt ist.

3. Reinigungsvorrichtung nach Anspruch 1 oder 2, dadurch gekennzeichnet, daß diese zwischen ihrem Grundkörper (32,32a) und dem Aufnahmeteil (30,30a) einen Greifteil aufweist, der für den Angriff einer Werkzeugwechseleinrichtung der Bearbeitungsmaschine vorgesehen ist.

4. Reinigungsvorrichtung nach Anspruch 3, dadurch gekennzeichnet, daß deren Greifteil gleich dem Greifteil des jeweiligen Werkzeughalters (44,44a) ausgebildet ist, insbesondere eine umlaufende Ringnut (122,122a) aufweist.

5. Reinigungsvorrichtung nach einem der Ansprüche 1 bis 4, dadurch gekennzeichnet, daß die Außenkontur des jeweiligen Werkzeughalters (44,44a) und des Aufnahmeteils (30,30a) aus einem konischen oder zylindrischen Schaft gebildet ist.

6. Reinigungsvorrichtung nach einem der Ansprüche 1 bis 5, dadurch gekennzeichnet, daß die Mittel, zur Reinigung des Werkzeughalters (44,44a)
    - mindestens eine Reinigungsbürste (64) und/oder
    - mindestens eine Abstreifereinrichtung (66) und/oder
    - mindestens eine Einrichtung (96,96a) zum Aufbringen eines Reinigungsmediums und/oder
    - mindestens eine, vorzugsweise mit Druckluft unter hohem Druck arbeitende Blaseinrichtung (94,94a)
aufweisen.

7. Reinigungsvorrichtung nach Anspruch 6, dadurch gekennzeichnet, daß die Mittel zur Reinigung des Werkzeughalters (44, 44a) vom Grundkörper (32,32a) aufgenommen sind,
    - die, sofern sie aus der jeweiligen Reinigungsbürste (64) und/oder der jeweiligen Abstreifereinrichtung (66) bestehen, für eine Anlage mit dem Werkzeughalter (44,44a), zumindest teilweise, in den Aufnahmeraum (38,38a) hineinragen und
    - die, sofern es sich um die Einrichtung (96,96a) zum Aufbringen des Reinigungsmediums und/oder die Blaseinrichtung (94,94a) handelt, aus Kanälen (104,106,108,110,114,118; 104a,106a,108a,110a,114a,118a,124a) gebildet sind, die den Aufnahmeraum (38,38a) mit den das Reinigungsmedium bzw. die Druckluft führenden, innerhalb der Werkzeugaufnahme (12,12a) verlaufenden Leitungen (90,90a,92,92a) verbinden.

8. Reinigungsvorrichtung nach einem der Ansprüche 6 oder 7, dadurch gekennzeichnet, daß die jeweilige Reinigungsbürste (64) über die gesamte Länge des zu reinigenden Werkzeughalters (44) Bürsten (68) aufweist und/oder daß entlang einer definierbaren Planfläche (72) des Werkzeughalters (44) Mittel zur Reinigung, insbesondere in Form von Bürsten (68), in Anlage mit dieser Planfläche (72) zu deren Reinigung bringbar sind.

9. Reinigungsvorrichtung nach einem der Ansprüche 6 bis 8, dadurch gekennzeichnet, daß die jeweilige Abstreifereinrichtung (66) im wesentlichen leistenförmig ausgebildet ist und für die Anlage mit dem Werkzeughalter (44) eine Abstreiflippe (82) aufweist.

10. Reinigungsvorrichtung nach Anspruch 9, dadurch gekennzeichnet, daß die Abstreiflippe (82) mittels Ausgleichsmitteln (84,86,88) unter einer vorgebbaren Vorspannung an den Werkzeughalter (44) anpreßbar ist.

# Fig.1

# Fig.2

EP 0 458 014 A2

Fig.3

Fig.4

EP 0 458 014 A2